# EUROPEAN PATENT SPECIFICATION

(11) **EP 0 338 840 B1**
(45) Date of publication and mention of the grant of the patent: **29.12.1993**
(21) Application number: 89303962.8
(22) Date of filing: 20.04.1989
(51) Int. Cl.: G11B 7/09, G11B 7/135

(54) **Optical pick-up device**
Optisches Wiedergabegerät
Appareil optique pour la reproduction

(30) Priority: 20.04.1988 JP 97496/88
(43) Date of publication of application: 25.10.1989
(73) Proprietor: SHARP KABUSHIKI KAISHA, Osaka 545 (JP)
(72) Inventor: Kurata, Yukio, Tenri-shi Nara-ken (JP); Yoshida, Yoshio, Tenri-shi Nara-ken (JP); Nagahama, Toshiya, Yamatokoriyama-shi Nara-ken (JP)
(74) Representative: Brown, Kenneth Richard

(56) References cited:
- EP-A- 0 222 238
- EP-A- 0 228 620
- EP-A- 0 241 942
- EP-A- 0 258 450

## Description

The present invention relates to an optical pick-up device applicable to a device, such as CD [compact disk] player and optical videodisk player.

Conventional optical pick-up devices used in CD players etc. often utilize the so-called 3-spot system which has two sub-spots exclusively for detecting tracking error signals and a main-spot for detecting regenerative information signals RF and focusing error signals FE.

An optical pick-up device has also been developed which uses a diffraction (hologram) element. This results in a reduction in the number of optical parts necessary to form an optical pick-up device.

Examples of such conventional optical pick-up devices are shown in Figs. 10 and 11. A similar conventional optical pick-up is also described in EP-A-0.228.620.

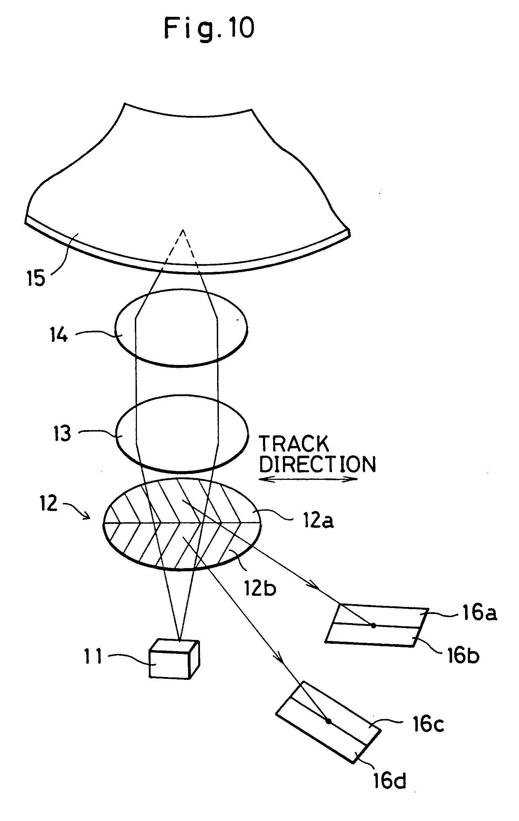

In an optical pick-up device as shown in Fig. 10, a laser beam emitted from a light emitting element 11 first passes through a diffracting element 12. The diffracted zero-order beam having thus passed through the diffracting element 12 is focused on the recording face of a disk 15 through a collimator lens 13 and an objective lens 14.

Then, the reflected beam from the recording face of the disk 15 passes through the objective lens 14, the collimator lens 13 and the diffracting element 12.

The diffracting element 12 is divided into two regions 12a and 12b by a parting line having the same direction as a track on the disk 15, each region having a different diffraction direction.

The first-order diffracted beam incident on one region 12a of the diffracting element 12 is focused on two divided photo-detecting elements 16a and 16b. The diffracted first-order beam incident on the other region 12b, is focused on two other photo-detecting elements 16c and 16d.

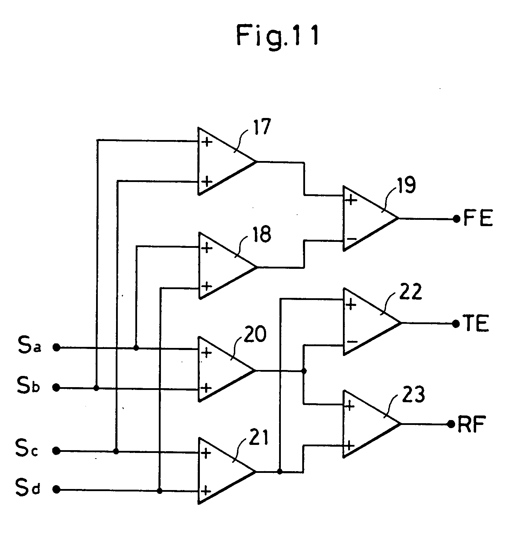

The output signals Sa, Sb, Sc and Sd from these photo-detecting elements 16a, 16b, 16c and 16d are then converted into regenerative information signal RF, focusing error signal FE and tracking error signal TE respectively by means of the operational circuit shown in Fig. 11.

The regenerative information signal RF is detected as a sum of the output signals Sa, Sb, Sc and Sd through adding circuits 20, 21 and 23.

$\text{RF = Sa + Sb + Sc + Sd}$

Meanwhile, the focusing error signal FE is detectable by applying the following operation to the output signals Sa, Sb, Sc and Sd as a sort of the knife edge method.

$\text{FE = (Sb + Sc) - (Sa + Sd)}$

Also, the tracking error signal TE is detectable by applying the following operation to the output signals Sa, Sb, Sc and Sd as what is called the push-pull method.

$\text{TE = (Sc + Sd) - (Sa + Sb)}$

That is, the tracking error TE can be detected by the difference between the intensity of the two light fluxes of laser beam divided by the parting line along the track direction.

Thus, if the optical axis of the objective lens 14 is offset from its normal position and/or inclined as a result of, for instance, the displacement of the optical axis of the objective lens 14 due to the tracking servo et cetera, the peak position in the laser beam's intensity distribution, is also off the center of the optical axis. This deviation of the peak position off the center of the optical axis influences the difference between the intensity of the two light fluxes of the divided laser beam.

Therefore, with a conventional optical pick-up device which, as described above, uses a diffracting element and detects the tracking error signal TE by the push-pull method, offset was likely to occur with respect to the tracking error signal TE. Hence even if the optical axis of the optical system should deviate slightly, accurate tracking control was unfeasible.

It is an object of the present invention to alleviate the aforementioned disadvantages of known optical pick up devices.

The present invention relates to an optical pick-up device comprising a light emitting element for producing laser light, an optical system for focusing said laser light onto a recording medium, said optical system including a diffracting element arranged in front of said light emitting element, and photo-detecting means for detecting reflected laser light from said recording medium, a region on said diffracting element being divided into two sub-regions by a parting line substantially perpendicular to a track direction on the recording medium, said diffracting element being arranged such that said reflected light from the recording medium is focused through said optical system onto said photo-detecting means, said device being adapted to detect tracking error signals and focusing error signals from output signals of said photo-detecting means, characterized by one of said sub-regions being adapted to split laser light incident thereon from said light emitting element, thereby forming a main spot and first and second sub-spots on said recording medium for applying the so-called three spot method for detecting focusing and tracking errors.

This invention has the advantage that manufacturing costs are lower than for known optical pick-up devices since it uses less components and has a simpler construction than known optical pick-up devices. Additionally, if a minor deviation of the optical axis occurs, offset does not take place with regard to the tracking error signal thereby enabling accurate tracking servo control.

In a preferred embodiment of the invention the photo-detecting means comprises two groups of photo-detecting elements each positioned where a respective one of two first-order diffracted beams of the reflected light from said recording medium diffracted by the said other sub-region of said diffracting element are respectively focused.

In another embodiment a so-called blaze property is imparted to said sub-region of said diffracting element, and there is positioned a group of photo-detecting elements where a first-order beam having higher optical intensity is focused.

In a further embodiment of the invention other of said sub-regions comprises a diffraction grating adapted so as to diffract the light reflected toward said photo detecting means in a direction substantially perpendicular to the track direction.

In yet a further embodiment of the invention, the photo-detecting means comprises a photo-detecting element for detecting a beam of a main spot reflected from said recording medium said photo-conducting element being divided into two elements by a parting line parallel to said parting line dividing the sub-regions on said diffracting element, the device further comprising an adding circuit for outputting the sum signals output from said respective elements of said photo-detecting element as a regenerative information signal, and a subtracting circuit for outputting a difference signal as a focusing error signal.

In a particular embodiment of the invention the aforementioned light emitting element and said photo-detecting means are housed in a common package having cap seal window which comprises said diffracting element.

A specific embodiment of the invention will now be described, with reference to the following drawings in which:
Fig. 1(a) is a side elevation showing an optical path of laser beam emitted from a light emitting element in an optical pick-up device of the present invention;
Fig. 1(b) is another similar side elevation showing an optical path of a reflected beam from a disk;
Fig. 2 is a front elevation showing the individual optical paths;
Fig. 3 is a block diagram showing the signal detection circuit;
Fig. 4 is a diagram showing the distribution of the laser beam,
Fig. 5 is a plan view showing the arrangement of the photo-detecting elements.
Fig. 6 (a)-(c) are plan views showing the principle of the knife edge for the photo-detecting elements respectively.
Fig. 7 is a view showing an inadequate arrangement of the photo-detecting elements.
Fig. 8 is a vertically-sectioned front elevation of a package for the light-emitting element.
Fig. 9 is a vertically-sectioned front elevation showing another example light-emitting element package.
Fig. 10 is a perspective view showing a conventional optical pick-up device utilizing a diffracting element.
Fig. 11 is a block diagram showing the signal detection circuit of a conventional optical pick-up device utilizing the diffracting element.

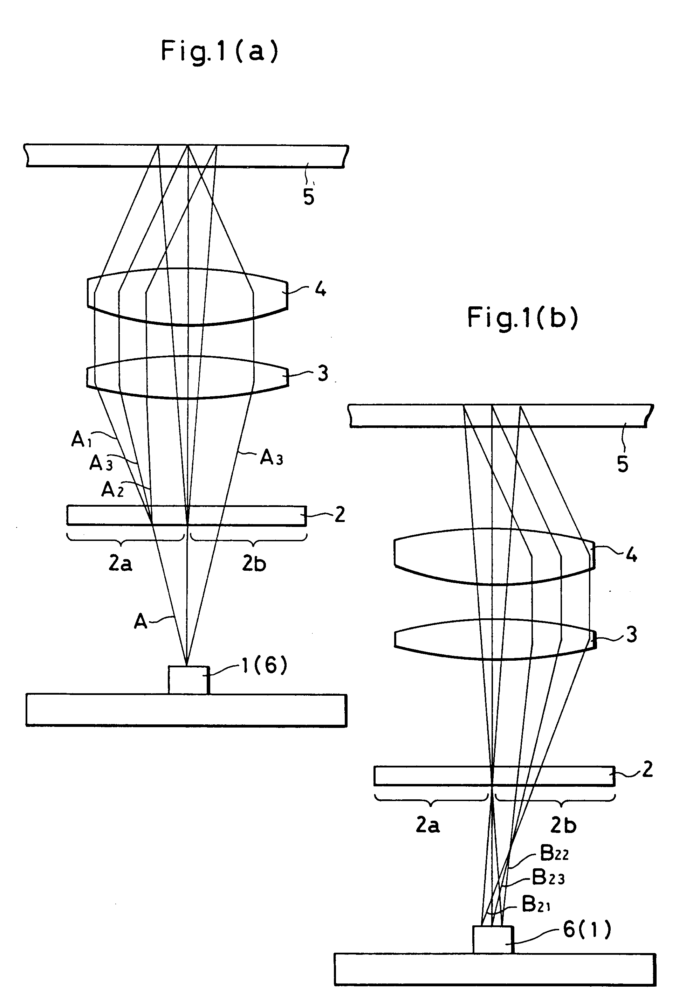

A preferred embodiment of the present invention will be described below under reference to the accompanying drawings Figs. 1 through 9.

This embodiment relates to an optical pick-up device of CD player et cetera.

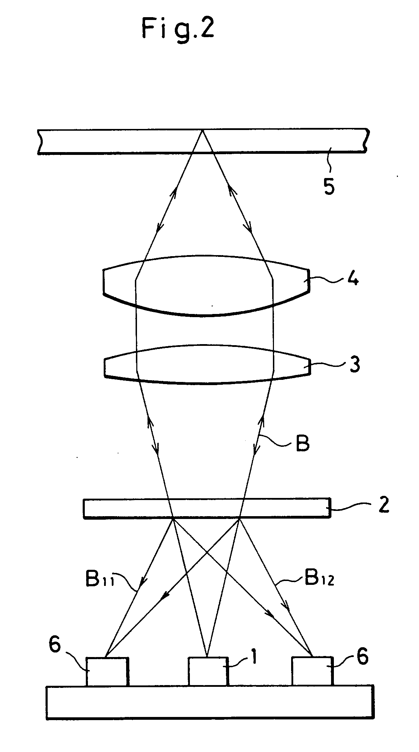

As shown in Figs. 1 and 2, in front of a light emitting element 1 of an optical pick-up device there are arranged diffracting element 2, collimator lens 3 and objective lens 4 are so arranged that a laser beam A emitted by light emitting element 1 is led to the recording face of a disk 5.

The aforementioned diffracting element 2 has its region divided into two sub-regions by the parting line approximately perpendicular to the track direction. In one sub-region 2a, there is formed a diffraction grating which causes diffraction approximately in the track direction, as shown in Fig. 1(a). Plus one (+1) order and minus one (-1) order diffracted beams of a laser beam A agree with the beams A₁ and A₂ which form two sub-spots in the 3-spot method.

The other sub-region 2b of the diffracting element 2 has formed therein another diffraction grating which causes diffraction substantially perpendicular to the track direction, as shown in Fig. 2. That is, the +1 order diffracted beam B₁₁ and the -1 order diffracted beam B₁₂ of the reflected beam B from the disk 5 are divided to both directions perpendicular to the track direction.

Also, since in the other sub-region 2b described above there takes place no diffraction in the track direction, as shown in Fig. 1(b), the aforementioned +1 order diffracted beam B₁₁ and -1 order diffracted beam B₁₂ are focused as beams B₂₁, B₂₂ and B₂₃ on the displaced positions in the track direction correspond to the aforementioned two sub-spots and undermentioned main-spot on the recording face of the disk 5.

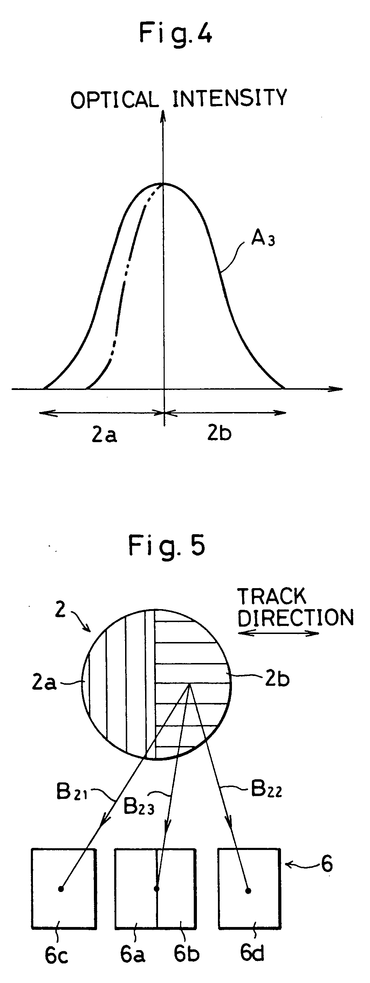

When the diffracting element 2 is constituted as mentioned above, the beam A₃ forming the main-spot in the 3-spot method is formed by the zero-order diffracted beam generated as the laser beam A passes through the sub-regions 2a and 2b of the diffracting element 2. Then, for instance, when the zero-order diffraction efficiency of the diffraction in one sub-region 2a is lower than that in the other sub-region 2b, the optical intensity of the optical line A₃ forming the main spot becomes asymmetrical as indicated by the two-dot chain line as shown in Fig. 4, this resulting in deterioration of the regenerative signal et cetera. Hence, both sub-regions 2a and 2b of the diffraction element 2 are set to have the zero-order diffraction efficiencies to be as equal as possible.

The parting line dividing the aforementioned diffracting element 2 is not an actual line but is an imaginary one cutting off the sub-regions 2a and 2b.

On the substrate the light emitting element 1 is provided, there are provided two photo-detectors 6, 6 on both sides of the light emitting element 1 in the direction perpendicular to the track direction. These two detectors 6, 6 are located where the +1 order diffracted beam B₁₁ and -1 order diffracted beam B₁₂ of the reflected beam B respectively by the other sub-region 2b are focused. And it is so arranged that the detection sensitivity is increased through synthesis of the output signals from the aforementioned photo-detectors 6, 6.

By the way, it is not absolutely necessary to provide two photo-detectors 6, 6, as mentioned above, and it is also possible to impart the blaze property to the other sub-region 2b of the diffracting element 2, and, for example, to increase the optical intensity of the +1 order diffracted beam B₁₁ and to thereby attain a sufficiently high sensitivity with only one photo-detector 6.

As shown in Fig. 5, the aforementioned photo-detector 6 comprises four photo-detecting elements 6a-6d, each letting out individual outputs. Photo-detecting elements 6a, 6b are provided adjacently on both sides of a border line substantially perpendicular to the track direction and the same direction with that of the parting line of diffracting element 2, and the reflected beam B₂₃ of the beam A₃ which form a main-spot on the disk 5 is irradiated on this border line. Meanwhile, the photo-detecting elements 6c, 6d are disposed on both sides of the aforementioned photo-detecting elements 6a, 6b with respect to the track direction and receive the reflected beams B₂₁, B₂₂ of the beams A₁, A₂, which form sub-spots.

The aforementioned photo-detecting elements 6a-6b are formed to be sufficiently long in the direction perpendicular to the track direction so as to cope with the variation of the wavelength of the light emitting element 1 and/or displacement of the focal point as a result of assembly errors.

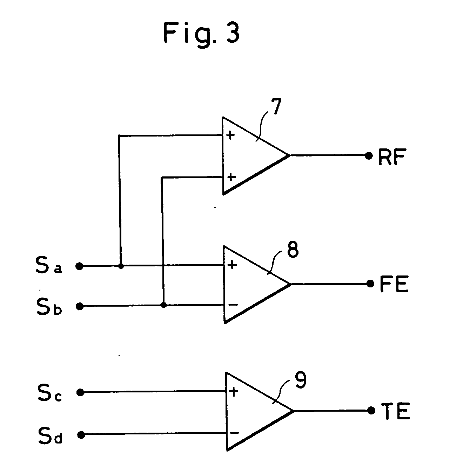

It is so arranged that the output signal Sa, Sb, Sc and Sd from the aforementioned photo-detecting elements 6a, 6b, 6c and 6d are input to a signal detection circuit shown in Fig. 3. This signal detection circuit is composed of an adding circuit 7 and two subtracting circuits 8, 9.

The output signals Sa, Sb are to be added in this adding circuit 7 and then converted into regenerative information signal RF. Also these signals Sa and Sb are subtracted in the subtracting circuit 8 and converted into focusing error signal FE. The aforementioned signals Sc and Sd may also be subtracted in the subtracting circuit 9 and converted into the tracking error signal TE.

The aforementioned light emitting element 1 and photo-detector 6 are housed into the package 10 in an integrated form. And also a monitoring photo-detector 24 is housed into the package 10 to monitor the light intensity of the light-emitting element 1. Normally such a package 10 has housed therein a light emitting element 1, photo-detector 6 and monitoring photo-detector 24 and is closed with a hermetically sealed glass window 10a, for such elements to be prevented from outside atmosphere such as moisture, oxygen et cetera.

In this case the diffracting element 2 is disposed before this glass window 10a. In this embodiment, however, the diffracting element 2 is directly secured to the package 10 instead of the glass window 10a to seal the interior thereby. By this, the number of the necessary parts can be reduced as well as the number of assembly steps.

The working mechanism of the pick-up device of the composition described above is as described below.

The laser beam A emitted from light emitting element 1 first passes through the diffracting element 2. The diffracted beam of zero-order having passed both sub-regions 2a, 2b are focused on the recording face of the disk 5 as the beam A₃ to form the main-spot. Meanwhile, the diffracted beams of +1 and -1 order which occur as the laser beam A passes through one sub-region 2a of the diffracted element 2 are focused as beams A₁ and A₂ in two directions on the recording face of the disk 5 at two positions displaced forward and backward from the main-spot A₃ in the approximately track direction and forms two sub-spots.

Then the beams B₂₁ - B₂₃ reflected in the individual spots on the recording face of the disk 5 are diffracted as they pass through the other sub-region 2b of the diffracting element 2, and the diffracted beams of +1 and -1 order are focused on the photo-detectors 6, 6.

The photo-detecting elements 6a, 6b of the individual photo-detectors 6 are irradiated with the reflected beam B₂₃ of the beam A₃ which form a main-spot and the signals Sa, Sb are output according to the intensity thereof. These output signals Sa, Sb are added in the adding circuit 7 and are output as the regenerative signal RF.

The aforementioned reflected beam B₂₃ is a part of the light flux of the reflected beam B which has passed through the other sub-region 2b of the diffracting element 2, that is, what has been diffracted of one side of the light flux divided by the parting line of the diffracting element 2.

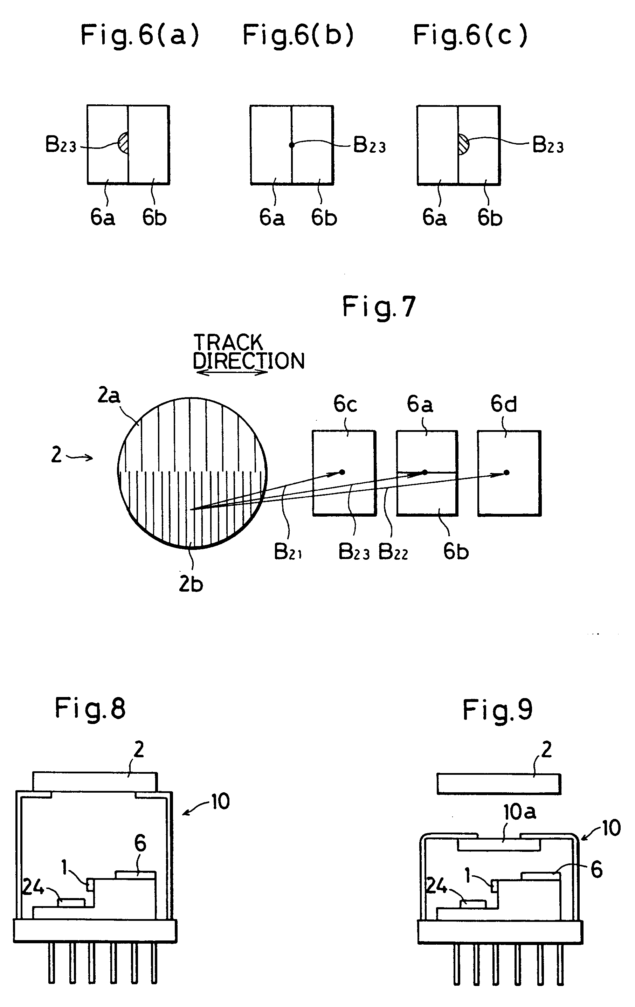

Hence, when the focal point of the laser beam A is matched as it is focused on the recording face of the disk 5, the reflected beam B₂₃ is focused as a point on the border line between the photo-detecting elements 6a, 6b as shown in Fig. 6(b). When the laser beam A focusing on the recording face of the disk 5 is displaced, a semilunar spot is formed on the photo-detecting element 6a or 6b as the direction of the displacement as shown in Figs. 6 (a)(c).

Hence, in a substantially same manner as in the case of the knife edge method, focusing error signal FE is output from the subtracting circuit 8 input the output signals Sa, Sb, and it is possible to detect the displacement of the focal point.

Meanwhile, the photo-detecting elements 6c, 6d are irradiated with the reflected beams B₂₁ and B₂₂ of the beams A₁ and A₂ forming sub-spots, and output signals Sc, Sd are output. And, each intensity of the aforementioned reflected beam B₂₁ and B₂₂ varies in the opposite directions as tracking error according to the 3-spot method.

Hence, the tracking error signal TE is output from the subtracting circuit 9 having received the output signals Sc, Sd.

To simulate the effect of the knife edge method in detecting the focusing error signal FE, it is necessary to match the directions of the parting line dividing the diffracting element 2 into two sub-regions 2a and 2b with that of the border line between the photo-detecting elements 6a and 6b.

When the oscillation wavelength of the light emitting element 1 fluctuates, the diffracting angle of the reflected beam B diffracted by the diffracting element 2 is caused to be changed, and the focusing position on the photo-detector 6 is thereby displaced in the direction of diffraction. To prevent influence by this displacement of the focusing position, it is desirous to match the diffracting direction with that of the border line between the photo-detecting elements 6a, 6b.

Hence, it is desirous to have the direction of the parting line between the sub-regions 2a, 2b of the diffracting element 2 with the diffracting direction 2b of diffracting element 2 as well as with the direction of the border line between the photo-detecting elements 6a and 6b.

Meanwhile, it is desirous to minimize the distance between the two sub-spots formed on the recording face of the disk 5 to prevent the offset of the tracking error signal TE due to the difference in radius of curvature between the tracks on the inner periphery side and the outer periphery side. The aforementioned distance between the sub-spots is desirous to be minimized also for preventing the deterioration of the detecting precision of the tracking error signal TE due to the positioning error as the pick up device is attached to a CD player or the like.

As to the photo-detecting elements 6c, 6d, it is essential that these be disposed on both sides along the track direction of the photo-detecting element 6a, 6b. Hence it is preferable to set the distance between the aforementioned photo-detecting elements 6c and 6d as small as possible.

As mentioned above, the diffraction angle of the reflected beam B diffracted by the diffracting element 2 varies according to the variation of the oscillation wavelength of the light emitting element 1. Hence, to ensure against the focusing position of the reflected beam B being not off the photo-detecting elements 6a-6d, it is desired to set the dimension of the photo-detecting elements 6a-6d in the direction of the diffraction of the reflected beam B as large as possible.

When, however, the photo-detecting elements 6a-6d are disposed with respect to the track direction as shown in Fig. 7, it is difficult to meet the two requirements of having the distance between the photo-detecting elements 6a,6d minimized, and setting the dimension of the photo-detecting elements 6a-6d in the diffraction direction of the reflected beam B as large as possible.

Hence, it is desirable, as shown in Fig. 5, to set the diffracting direction of the other sub-region 2b of the diffracting element 2 approximately perpendicular to the track direction, and it is desirable to have the photo-detecting elements 6a-6d set on the diffraction side of the aforementioned other sub-region 2b with respect to the diffracting element 2.

The sub-spot formed on the recording face of the disk 5 is preferably formed approximately oval with its long axis parallel to the track direction. One sub-region 2a of the diffracting element 2 in which the beams A₁, A₂ forming sub-spots are apart from the laser beam A is desirous to be small in dimension and less in the number of diffraction gratings in the track direction.

For the reasons as described above, it is preferable to have the sub-regions 2a, 2b to be divided in two by a parting line crossing the track direction approximately at right angle and thereby it is possible to detect tracking error signal TE et cetera not including offsets, regardless of the variation in wavelength, and moreover lowering of the manufacturing cost can be attained by increasing the allowable range for the position at which the optical pick-up device is attached.

An optical pick-up device of such a composition enables detecting the focusing error signal by a sort of knife edge method similar to the prior art cited, and also the tracking error signal can be detected by the 3-spot method which is known to be highly reliable for the tracking error signal, hence there is no problem of offset being caused with regard to the tracking error signal due to displacement of optical axis in the optical system.

Hence, accurate tracking servo control is feasible with the number of parts of the optical system being reduced by the use of the diffracting element.

Also it is possible to house both aforementioned light emitting element and photo-detecting element integrated in a common housing, using the diffracting element as its cap seal window, this enabling further lowering of the manufacturing cost.

## Claims

1. An optical pick-up device comprising a light emitting element (1) for producing laser light (A), an optical system (2, 3, 4) for focusing said laser light (A) onto a recording medium (5), said optical system including a diffracting element (2) arranged in front of said light emitting element (1), and photo-detecting means (6) for detecting reflected laser light from said recording medium (5), a region on said diffracting element (2) being divided into two sub-regions (2a, 2b) by a parting line substantially perpendicular to a track direction on the recording medium (5), said diffracting element (2) being arranged such that said reflected light from the recording medium (5) is focused through said optical system (2, 3, 4) onto said photo-detecting means (6), said device being adapted to detect tracking error signals and focusing error signals from output signals of said photo-detecting means (6), characterized by one of said sub-regions (2a) being adapted to split laser light (A) incident thereon from said light emitting element, thereby forming a main spot and first and second sub-spots on said recording medium (5) for applying the so-called three spot method for detecting focusing and tracking errors.

2. An optical pick-up device according to claim 1, wherein the photo-detecting means (6) comprises two groups of photo-detecting elements (6) each positioned where a respective one of two first-order diffracted beams (B₁₁, B₁₂) of the reflected light from said recording medium (5) diffracted by the said other sub-region (2b) of said diffracting element (2) are respectively focused.

3. An optical pick-up device according to claim 1, wherein a so-called blaze property is imparted to said sub-region (2b) of said diffracting element (2), and there is positioned a group of photo-detecting elements (6) where a first-order beam having higher optical intensity is focused.

4. An optical pick-up device according to any preceding claim, wherein the other of said sub-regions (2b) comprises a diffraction grating adapted so as to diffract the light reflected toward said photo-detecting means (6) in a direction substantially perpendicular to the track direction.

5. An optical pick-up device according to any preceding claim, wherein the photo-detecting means (6) comprises a photo-detecting element (6a/6b) for detecting a beam (B₂₃) of a main spot reflected from said recording medium (5) said photo-detecting element (6a/6b) being divided into two elements (6a/6b) by a parting line parallel to said parting line dividing the sub-regions (2a, 2b) on said diffracting element (2), the device further comprising an adding circuit (7) for outputting the sum signals (Sa, Sb) output from said respective elements of said photo-detecting element (6a/6b) as a regenerative information signal, and a subtracting circuit (8) for outputting a difference signal as a focusing error signal.

6. An optical pick-up device according to any preceding claim, wherein the aforementioned light emitting element (1) and said photo-detecting means (6) are housed in a common package having cap seal window (10a) which comprises said diffracting element (2).

## Patentansprüche

1. Optisches Wiedergabegerät mit einem lichtemittierendem Element (1) zur Erzeugung von Laserlicht (A), einem optischen System (2, 3, 4) zur Fokussierung des Laserlichts (A) auf ein Speichermedium (5), wobei das optische System ein vor dem lichtemittierendem Element (1) angeordnetes Beugungselement (2) und eine lichtempfindliche Einrichtung (6) zum Erfassen des vom Speichermedium (5) reflektierten Laserlichts umfaßt, wobei ein Bereich des Beugungselements (2) durch eine im wesentlichen senkrecht zur Spurrichtung des Speichermediums (5) verlaufende Trennlinie in zwei Unterbereiche (2a, 2b) aufgeteilt ist und das Beugungselement (2) so angeordnet ist, daß das vom Speichermedium (5) reflektierte Licht durch das optische System (2, 3, 4) auf die lichtempfindliche Einrichtung (6) fokussiert wird, um das Wiedergabegerät an die Erfassung von Spurfehlersignalen und Fokussierungsfehlersignalen der von der lichtempfindlichen Einrichtung (6) ausgegebenen Signale anzupassen, **dadurch gekennzeichnet**, daß einer der Unterbereiche (2a) so ausgelegt ist, daß das von dem lichtemittierendem Element einfallenden Laserlicht (A) in einen Hauptpunkt sowie einen ersten und einen zweiten Nebenpunkt auf dem Speichermedium (5) aufgeteilt wird zur Bestimmung von Fokussier- und Spurfehlern nach der sogenannten Drei-Punkt-Methode.

2. Optisches Wiedergabegerät nach Anspruch 1, **dadurch gekennzeichnet**, daß die lichtempfindliche Einrichtung (6) zwei Gruppen von lichtempfindlichen Elementen (6) aufweist, die jeweils dort angeordnet sind, wo jeweils einer von zwei gebeugten Strahlen (B₁₁, B₁₂) erster Ordnung des vom Speichermedium (5) reflektierten und vom anderen Unterbereich (2b) des Beugungselements (2) gebeugten Lichts fokussiert wird.

3. Optisches Wiedergabegerat nach Anspruch 1, **dadurch gekennzeichnet**, daß der Unterbereich (2b) des Beugungselements (2) eine sogenannte Markierungseigenschaft aufweist und dort eine Gruppe von lichtempfindlichen Elementen (6) angeordnet ist, wo ein Strahl erster Ordnung mit höherer optischer Intensität fokussiert wird.

4. Optisches Wiedergabegerät nach einem der vorstehenden Ansprüche, **dadurch gekennzeichnet**, daß der andere der Unterbereiche (2b) ein Beugungsgitter umfaßt, das das in Richtung der lichtempfindlichen Einrichtung (6) reflektierte Licht im wesentlichen in eine Richtung senkrecht zur Spurrichtung beugt.

5. Optisches Wiedergabegerät nach einem der vorstehenden Ansprüche, **dadurch gekennzeichnet**, daß die lichtempfindliche Einrichtung (6) ein lichtempfindliches Element (6a/6b) zum Erfassen eines Strahls (B₂₃) von einem Hauptpunkt, der vom Speichermedium (5) reflektiert wird, aufweist, wobei das lichtempfindliche Element (6a/6b) in zwei Elemente (6a/6b) durch eine Trennlinie geteilt ist, die parallel zu der Trennlinie verläuft, die die Unterbereiche (2a, 2b) auf dem Beugungselement (2) trennt, und das Wiedergabegerät darüberhinaus einen Additionsschaltkreis (7) zur Ausgabe der Summensignale (Sa, Sb), die vom jeweiligen lichtempfindlichen Element (6a/6b) als ein Erneuerungssignal ausgegeben werden, und einen Subtraktionsschaltkreis (8) aufweist, der zur Ausgabe eines Differenzsignals als Fokussierfehlersignal dient.

6. Optisches Wiedergabegerät nach einem der vorstehenden Ansprüche, **dadurch gekennzeichnet**, daß das lichtemittierende Element (1) und die lichtempfindliche Einrichtung (6) in einem üblichen Gehäuse mit einem das Beugungselement (2) umfassenden Deckel-Versiegelungsfenster (10a) untergebracht sind.

## Revendications

1. Dispositif optique de reproduction comprenant un élément émetteur de lumière (1) pour produire une lumière laser (A), un système optique (2, 3, 4) pour focaliser ladite lumière laser (A) sur un support d'enregistrement (5), ledit système optique comprenant un élément de diffraction (2) disposé devant ledit élément émetteur de lumière (1), et des moyens de photo-détection (6) pour détecter la lumière laser réfléchie par ledit support d'enregistrement (5), une région sur ledit élément de diffraction (2) étant divisée en deux sous-régions (2a, 2b) par une ligne de partition sensiblement perpendiculaire à une direction de piste sur le support d'enregistrement (5), ledit élément de diffraction (2) étant disposé de telle manière que ladite lumière réfléchie provenant du support d'enregistrement (5) est focalisée par l'intermédiaire dudit système optique (2, 3, 4) sur lesdits moyens de photo-détection (6), ledit dispositif étant adapté pour détecter des signaux d'erreur d'alignement sur piste et des signaux d'erreur de focalisation à partir de signaux de sortie desdits moyens de photo-détection (6), caractérisé en ce que l'une desdites sous-régions (2a) est adaptée pour diviser la lumière laser (A) tombant sur elle à partir dudit élément émetteur de lumière, pour former ainsi un spot principal et de premier et second spots secondaires sur ledit support d'enregistrement (5) pour appliquer le procédé dit à trois spots pour la détection d'erreurs de focalisation et d'alignement sur piste.

2. Dispositif optique de reproduction selon la revendication 1, dans lequel lesdits moyens de photo-détection (6) comprennent deux groupes d'éléments de photo-détection (6) disposés chacun en un endroit où un faisceau respectif parmi deux faisceaux diffractés de premier ordre (B₁₁, B₁₂) de la lumière réfléchie par ledit support d'enregistrement (5) et diffractée par ladite autre sous-région (2b) dudit élément de diffraction (2) est respectivement focalisé.

3. Dispositif optique de reproduction selon la revendication 1, dans lequel une propriété dite de grande luminosité est conférée à ladite sous-région (2b) dudit élément de diffraction (2), et un groupe d'éléments de photo-détection (6) est positionné à l'endroit où est focalisé un faisceau de premier ordre ayant une intensité optique plus élevée.

4. Dispositif optique de reproduction selon l'une quelconque des revendications précédentes, dans lequel l'autre desdites sous-régions (2b) comprend un réseau de diffraction adapté pour diffracter la lumière réfléchie vers lesdits moyens de photo-détection (6) dans une direction sensiblement perpendiculaire à la direction de pistes.

5. Dispositif optique de reproduction selon l'une quelconque des revendications précédentes, dans lequel lesdits moyens de photo-détection (6) comprennent un élément de photo-détection (6a/6b) pour détecter un faisceau (B₂₃) d'un spot principal réfléchi par ledit support d'enregistrement (5), ledit élément de photo-détection (6a/6b) étant divisé en deux éléments (6a/6b) par une ligne de partition parallèle à ladite ligne de partition divisant lesdites sous-régions (2a, 2b) dudit élément de diffraction (2), le dispositif comprenant, en outre, un circuit additionneur (7) pour délivrer en sortie les signaux de sommation (Sa, Sb) délivrés en sortie par lesdits éléments respectifs dudit élément de photo-détection (6a/6b) en tant que signal d'informations à régénération, et un circuit soustracteur (8) pour délivrer en sortie un signal de différence en tant que signal d'erreur de focalisation.

6. Dispositif optique de reproduction selon l'une quelconque des revendications précédentes, dans lequel l'élément émetteur de lumière sus-mentionné (1) et lesdits moyens de photo-détection (6) sont logés dans un emballage commun comportant une fenêtre de scellement formant couvercle (10a) qui comprend ledit élément de diffraction (2).
